# EUROPÄISCHE PATENTSCHRIFT

(11) **EP 1 855 829 B1**
(45) Veröffentlichungstag und Bekanntmachung des Hinweises auf die Patenterteilung: **24.06.2009**
(21) Anmeldenummer: 06703825.7
(22) Anmeldetag: 21.01.2006
(51) Int. Cl.: B23B 31/26

(54) **Spannsystem**
Clamping system
Système de serrage

(30) Priorität: 26.02.2005 DE 102005008892
(43) Veröffentlichungstag der Anmeldung: 21.11.2007
(73) Patentinhaber: OTT-JAKOB GmbH & Co. Spanntechnik KG, 87663 Lengenwang (DE)
(72) Erfinder: MOHR, Peter, 87487 Wiggensbach (DE); GREIF, Josef, 87654 Friesenried (DE)
(74) Vertreter: Schwarz, Thomas
(86) Internationale Anmeldenummer: PCT/EP2006/000536
(87) Internationale Veröffentlichungsnummer: WO 2006/089608

(56) Entgegenhaltungen:
- EP-A- 0 909 601
- DE-A1- 3 312 571
- DE-U1- 8 402 787
- DE-U1- 20 003 763
- US-A- 3 474 705
- US-A- 4 335 498

## Beschreibung

Die Erfindung betrifft ein Spannsystem nach dem Oberbegriff des Anspruchs 1. Ein derartiges Spannsystem ist aus dem Dokument DE 84 02 787 U bekannt.

Spannvorrichtungen zur lösbaren Halterung von Werkzeugen oder Werkzeughaltern in einem Aufnahmeteil weisen in der Regel eine in dem Aufnahmeteil angeordnete Spannzange oder einen Spannsatz mit mehreren über den Umfang verteilten Zangenelementen zum Eingriff am Werkzeug bzw. Werkzeughalter auf. Bei den herkömmlichen Spannvorrichtungen sind die Zangenelemente in der Regel an einer axial beweglichen Zangenhalterung angeordnet oder werden durch einen axial verschiebbaren Spannkegel betätigt. Bei beiden Ausführungen sind jedoch zur Bewegung der Zangenelemente zwischen einer Spann- und Freigabestellung relativ große Axialverschiebungen bzw. Hubbewegungen der Zangenhalterung bzw. des Spannkegels erforderlich. Da diese Hubbewegungen beim Lösen der Spannzange üblicherweise entgegen der Kraft einer Spannfeder erfolgen, wird hierfür ein relativ hoher Kraft- und Energieaufwand benötigt. Außerdem muss für die erforderlichen Hubbewegungen auch ein entsprechend großer Bauraum vorgesehen sein.

Aufgabe der Erfindung ist es, ein Spannsystem zu schaffen, die kompakt aufgebaut sind und auch ohne großen Kraft- und Energieaufwand einen automatischen Werkzeugwechselvorgang bei dennoch sicherer und zuverlässiger Halterung der Werkzeuge ermöglichen.

Diese Aufgabe wird durch ein Spannsystem mit den Merkmalen des Anspruchs 1 gelöst. Zweckmäßige Ausgestaltungen und vorteilhafte Weiterbildungen der Erfindung sind Gegenstand der Unteransprüche.

Das erfindungsgemäße Spannsystem weist eine in einer Arbeitsspindel einer Werkzeugmaschine integrierte erste Spannvorrichtung und einen in der Arbeitsspindel auswechselbar angeordneten und durch die erste Spannvorrichtung lösbar fixierbaren Werkzeugwechselkopf mit einer darin integrierten zweiten Spannvorrichtung auf. Beide Spannvorrichtungen können zweckmäßigerweise durch eine der Arbeitsspindel zugeordnete Betätigungseinheit betätigt werden, so dass sowohl ein automatischer Werkzeugwechsel als auch ein automatischer Wechsel von Werkzeugwechselköpfen ermöglicht wird.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Werkzeugaufnahme mit einer integrierten Spannvorrichtung in einem Längsschnitt;
- **Figur 2**: den vorderen Teil der in Figur 1 gezeigten Werkzeugaufnahme in einer vergrößerten Schnittansicht;
- **Figur 3**: den hinteren Teil der in Figur 1 gezeigten Werkzeugaufnahme in einer vergrößerten Schnittansicht;
- **Figur 4**: eine Schließelement der in Figur 1 gezeigten Spannvorrichtung in einer Vorderansicht und einer geschnittenen Seitenansicht;
- **Figur 5**: ein Halteelement der in Figur 1 gezeigten Spannvorrichtung in einer Vorderansicht und einer geschnittenen Seitenansicht;
- **Figur 6**: eine Spannzange der in Figur 1 gezeigten Spannvorrichtung in einer Vorderansicht und einer geschnittenen Seitenansicht und
- **Figur 7**: ein Spannsystem mit einer Arbeitsspindel und einem Werkzeugwechselkopf.

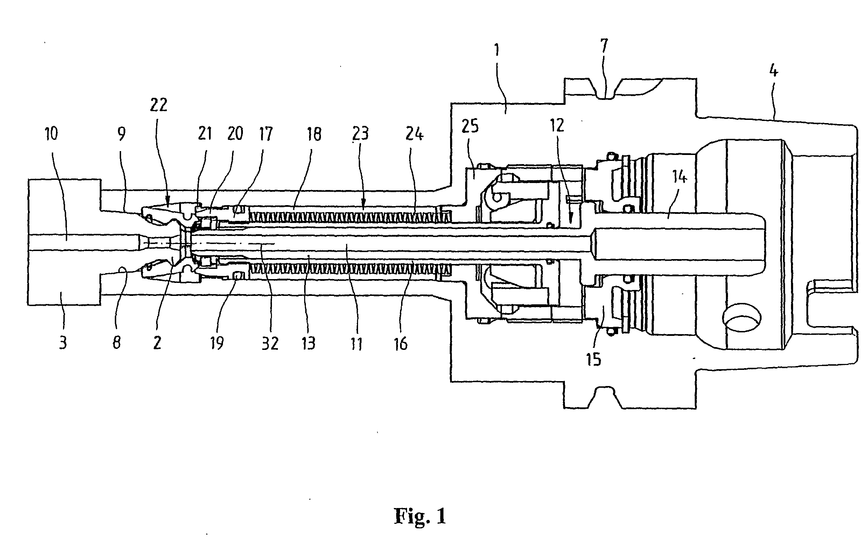

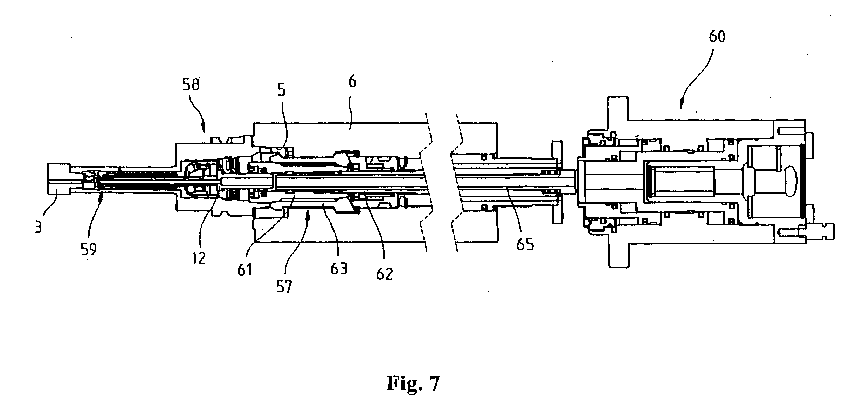

Die Figur 1 zeigt ein im Wesentlichen hohlzylindrisches Aufnahmeteil 1, in dem eine Spannvorrichtung zum automatischen Spannen eines mit einem Anzugsbolzen 2 versehenen Werkzeugs 3 integriert ist. Bei der hier gezeigten Ausführung ist das hohlzylindrische Aufnahmeteil 1 als Werkzeughalter ausgeführt, der z.B. über einen automatischen Werkzeugwechsler in eine an sich bekannte Arbeitsspindel einer Werkzeugmaschine eingesetzt und dort über einen ebenfalls bekannten Spannmechanismus gespannt werden kann. Das hohlzylindrische Aufnahmeteil 1 weist hierzu an seinem in Figur 1 rechten hinteren Ende einen Außenkegel 4 zur Einführung in einen entsprechenden Innenkegel 5 am vorderen Ende einer in Figur 7 dargestellten Arbeitsspindel 6 auf. An der Außenseite des Aufnahmeteils 1 ist ferner eine umlaufende Nut 7 für einen Werkzeuggreifer des automatischen Werkzeugwechslers oder dgl. vorgesehen.

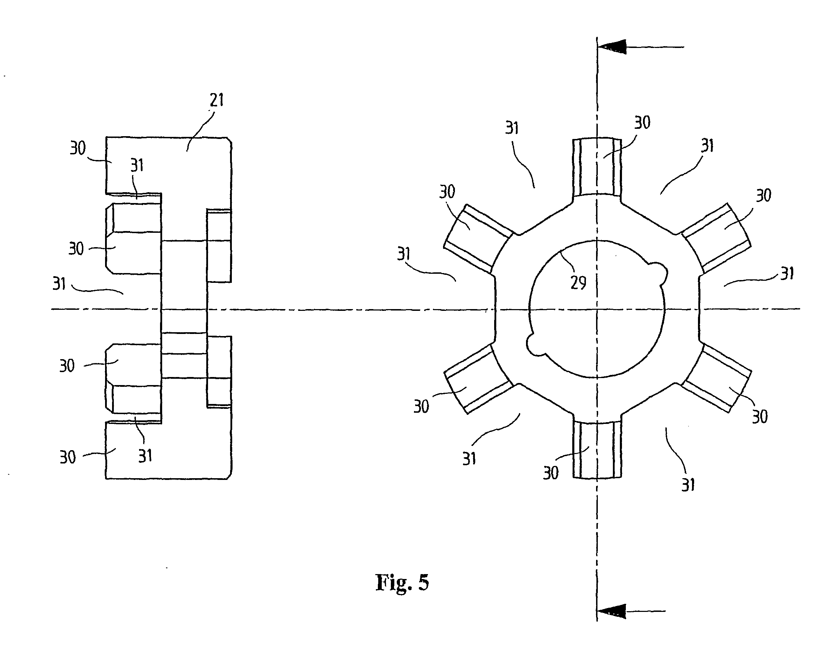

An dem in Figur 1 linken vorderen Ende enthält das hohle Aufnahmeteil 1 einen Innenkonus 8 zur Aufnahme eines entsprechenden Außenkonus 9 des Werkzeugs 3. Das Werkzeug 3 weist einen durchgehenden zentralen Kanal 10 für die Zuführung eines Kühlmediums oder dgl. auf. Innerhalb des hohlen Aufnahmeteils 1 ist eine mit einer Durchgangsbohrung 11 versehene Druckstange 12 verschiebbar geführt. Die Druckstange 12 enthält einen schlankeren vorderen Teil 13 und eine dickeren hinteren Teil 14, der über eine mit Dichtungen versehene Führungsbuchse 15 abgedichtet in dem Aufnahmeteil 1 axial verschiebbar geführt ist. Auf dem schlankeren vorderen Teil 14 der Druckstange 12 ist eine dazu koaxiale hohle Zugstange 16 verschiebbar angeordnet. An dem vorderen Ende der Zugstange 16 ist ein in Figur vergrößert dargestelltes Schließelement 17 befestigt. Das in Art einer Buchse ausgeführte Schließelement 17 ist innerhalb einer Bohrung 18 des Aufnahmeteils 1 verschiebbar und durch einen Dichtring 19 radial abgedichtet geführt. Das Schließelement 17 enthält nach vorne vorstehenden Spannklauen 20, die ein in Figur 5 vergrößert dargestelltes Halteelement 21 durchgreifen und in Eingriff mit einer in Figur vergrößert dargestellten Spannzange 22 stehen. Die Zugstange 16 mit dem daran befestigten Schließelement 17 wird durch eine Federanordnung 23 nach vorne in Richtung der Spannzange 22 gedrückt. Bei der gezeigten Ausführung besteht die Federanordnung 23 aus einem Tellerfederpaket, bei dem mehrere Tellerfedern 24 um die Zugstange 16 angeordnet und zwischen dem hinteren Ende des Schließelements 17 und dem vorderen Ende einer im Aufnahmeteil 1 fest angeordneten Lagerbuchse 25 eingespannt sind.

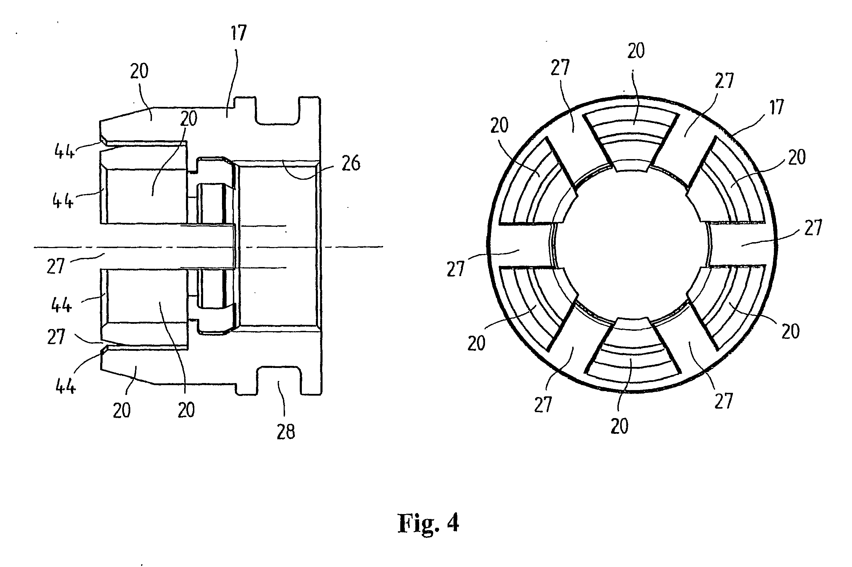

Wie aus Figur 4 hervorgeht, enthält das über ein Innengewinde 26 am vorderen Ende der Zugstange 16 befestigte Schließelement 17 sechs nach vorne in Richtung der Spannzange 22 vorstehende Spannklauen 20, die einen ringsegmentförmigen Querschnitt aufweisen. Zwischen den nach vorne abgeschrägten Spannklauen 20 sind rechteckige Nuten 27 vorgesehen. An der Außenseite weist das Schließelement 17 außerdem eine Ringnut 28 für den in Figur 1 dargestellten Dichtring 19 auf.

In Figur 5 ist das mit dem Schließelement 17 zusammenwirkende Halteelement 21 vergrößert dargestellt. Es enthält eine Durchgangsöffnung 29 und sechs sternförmig nach außen vorstehende Stege 30, zwischen denen Zwischenräume 31 für den Durchgriff der Spannklauen 20 vorgesehen sind. Das sternförmige Haltelement 21 ist ortsfest in dem Aufnahmeteil 1 angeordnet und bildet einen festen Anschlagpunkt für das über die Federanordnung 23 nach vorne gedrückte Schließelement 17.

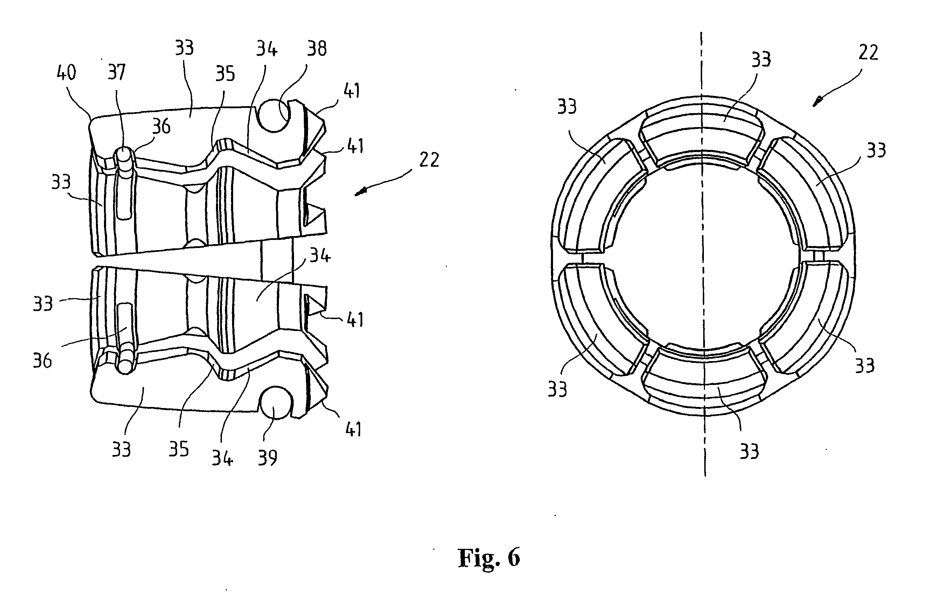

In Figur 6 ist die Spannzange 22 in einer Schnittansicht und einer Vorderansicht gezeigt. Sie besteht bei der dargestellten Ausführung aus sechs um eine Mittelachse 32 des Aufnahmeteils 1 konzentrisch angeordneten Zangenelementen 33, die an ihrer Innenseite eine keilförmige Vertiefung 34 mit einer vorderen schrägen Einzugsfläche 35 aufweisen. An der Innenseite der Zangenelemente 33 ist eine innere Ringnut 36 für einen Federring 37 vorgesehen. Die Zangenelemente 33 weisen außerdem an der Außenseite eine äußere Ringnut 38 für eine hier als Ringfeder ausgeführte Spannfeder 39 auf. An dem in der Schnittansicht von Figur 6 linken vorderen Ende haben die Zangenelemente 33 eine abgerundete Anlagekante 40, während am rechten hinteren Ende der Zangenelemente 33 eine schräge Angriffsfläche 41 vorgesehen ist.

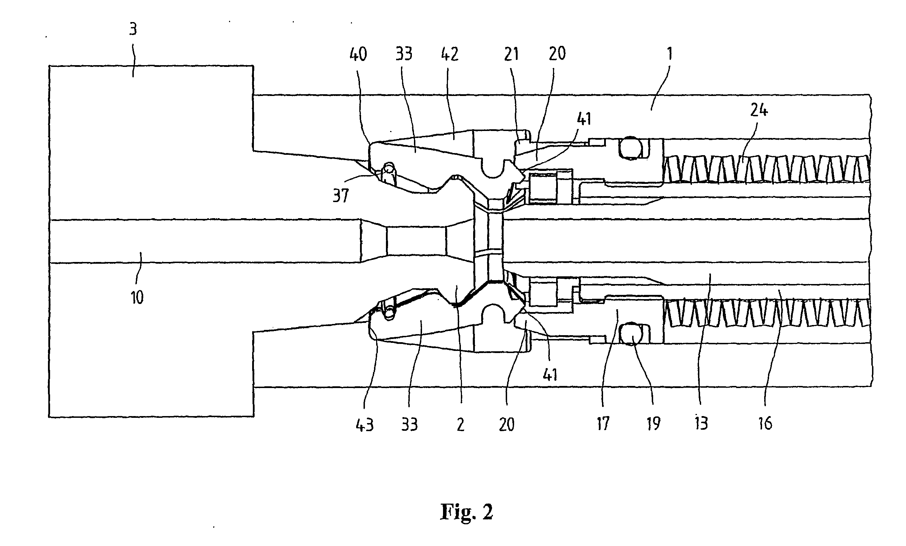

Wie besonders aus Figur 2 ersichtlich, sind die Zangenelemente 33 in einer entsprechenden Ausnehmung 42 des Aufnahmeteils 1 angeordnet. Die vorderen Enden der Zangenelemente 33 liegen mit ihren abgerundeten vorderen Kanten 40 an einer Ringschulter 43 im Inneren des Aufnahmeteils 1 an und werden durch den Federring 37 radial nach außen gedrückt. An ihren hinteren Enden werden die Zangenelemente 33 durch die hier nicht dargestellte Spannfeder 39 dagegen radial nach innen gedrückt. Der Anzugsbolzen 2 des Werkzeugs 3 wird dadurch von dem keilförmigen Vertiefungen 34 der Zangenelemente 33 umschlossen und durch die schräge Einzugsfläche 35 in das Aufnahmeteil 1 eingezogen. Bei der in Figur 2 dargestellten Spannstellung werden die hinteren Enden der Zangenelemente 33 außerdem durch die nach vorne vorstehenden Spannklauen 20 des durch die Federanordnung 23 nach vorne beaufschlagten Schließelements 17 nach innen gedrückt. Die Spannklauen 20 weisen hierzu an ihren vorderen Enden in Figur 4 erkennbare schräge Spannflächen 44 zur Anlage an den schrägen Angriffsflächen 41 der Zangenelemente 33 auf.

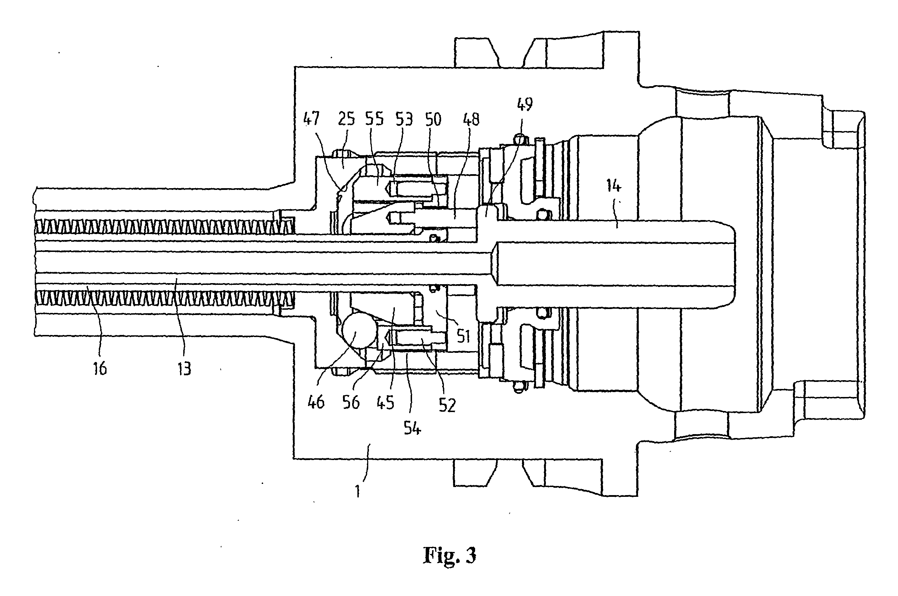

In Figur 3 ist ein Lösegetriebe zum Lösen der Spannzange 22 gezeigt. Durch dieses Lösegetriebe wird eine Vorwärtsbewegung der Druckstange 12 in eine Rückwärtsbewegung der Zugstange 16 und umgekehrt umgesetzt. Das Lösegetriebe enthält einen Spannkegel 45 der an seiner vorderen Kegelfläche über Kugeln 46 auf einer konischen Anlagefläche 47 an der Innenseite der im Aufnahmeteil 1 fest angeordneten Lagerbuchse 25 abgestützt ist. Der Spannkegel 45 ist an der Rückseite durch mehrere über den Umfang verteilte Druckstifte 48 an einem Ringbund 49 der Druckstange 12 abgestützt. Die Druckstifte 48 sind an der Rückseite des Spannkegels 45 eingeschraubt und ragen durch Durchgangslöcher 50 in einem Ringflansch 51 am hinteren Ende der Zugstange 16. Die hinteren freien Enden der Druckstifte 48 liegen an der Vorderseite des Ringbunds 49 der Druckstange 12 an. An der Außenseite des Ringflansches 51 sind nach vorne vorstehende Stifte 52 befestigt, die in entsprechende Sacklöcher 53 an der Rückseite eines Druckrings 54 eingreifen. Der Druckring 54 enthält abwechselnd nach vorne vorstehende und zurückversetzte Stege 55 bzw. 56, wobei die vorstehenden Stege 55 als Abstandshalter für die Kugeln 46 dienen und die zurückversetzten Stege 56 mit ihrem vorderen Ende an den Kugeln 46 anliegen.

Anhand der Figuren 1 bis 3 wird im folgenden die Funktionsweise der vorstehend beschriebenen Spannvorrichtung erläutert. In diesen Figuren ist die Spannvorrichtung in einer Spannstellung dargestellt. In der gezeigten Spannstellung werden die Zangenelemente 33 der Spannzange 22 an ihren hinteren Enden durch die Ringfeder 29 und durch die Spannklauen 20 der über die Federanordnung 23 nach vorne beaufschlagten Schließbuchse 17 nach innen gedrückt. Dadurch wird der Anzugsbolzen 2 des Werkzeugs 2 geklemmt und in das Aufnahmeteil 1 eingezogen. Durch die Spannklauen 20 der Schließbuchse 17 werden die Zangenelemente 33 in der Spannstellung gehalten, wodurch eine sichere Halterung des Werkzeugs 3 in dem hier als Werkzeughalter ausgeführten Aufnahmeteil 1 gewährleistet wird.

Zum Lösen und zur Freigabe des Werkzeugs 3 wird die Druckstange 12 durch einen hier nicht dargestellten Betätigungsmechanismus nach vorne in Richtung des Werkzeugs 3 gedrückt. Über die Druckstifte 48 wird dabei der Spannkegel 48 ebenfalls nach vorne geschoben. Dadurch wandern die an der konischen Anlagefläche 47 anliegenden Kugeln 46 radial nach außen und schieben dabei den Druckring 54 und die mit diesem über die Stifte 52 verbundene Zugstange 16 nach hinten. Dabei wird auch die am vorderen Ende der Zugstange 16 befestigte Schließbuchse 17 entgegen der Kraft der Federanordnung 23 nach hinten verschoben, so dass die Spannklauen 20 der Schließbuchse 17 außer Eingriff mit den Zangenelementen 33 gelangen. Selbst wenn die Spannklauen 20 außer Eingriff mit den Zangenelementen 33 gelangen, werden die hinteren Enden der Zangenelemente 33 von der Ringfeder 39 weiter radial nach innen gedrückt. Das Werkzeug 3 wird so noch in dem Aufnahmeteil 1 gehalten, kann aber durch eine entsprechende Zugkraft aus dem Aufnahmeteil 1 entnommen werden. Die Länge der Druckstange 12 kann derart gewählt werden, dass durch ihr vorderes Ende das Werkzeug 3 heraus geschoben wird.

In Figur 7 ist ein Spannsystem mit einer durch einen Antrieb drehbaren Arbeitsspindel 6 einer Werkzeugmaschine, einer in der Arbeitsspindel 6 integrierten ersten Spannvorrichtung 57, einem in der Arbeitsspindel 6 auswechselbar angeordneten und durch die erste Spannvorrichtung 57 lösbar fixierbaren Werkzeugwechselkopf 58 mit einer integrierten zweiten Spannvorrichtung 59 und einer Löseeinheit 60 zum Lösen der ersten und zweiten Spannvorrichtung 57 bzw. 59 gezeigt. Der Aufbau und die Funktionsweise des Werkzeugwechselkopfs 58 mit der darin integrierten Spannvorrichtung 59 ist vorstehend ausführlich erläutert. Die in der Arbeitsspindel 6 integrierte erste Spannvorrichtung 57 enthält eine Spannhülse 61, die am vorderen Ende einer innerhalb der Arbeitspindel 6 koaxial zu deren Mittelachse verschiebbar angeordneten hohlen Spannstange 62 angeordnet ist. Die Spannhülse 61 wird von mehreren durch die Axialbewegung der Spannhülse 61 radial verschiebbaren Spannklauen 63 umgeben. Durch einen Abstandshalter 64 werden die Spannklauen 63 geführt und in Umfangsrichtung voneinander beabstandet gehalten. Die Spannhülse 61 wird durch eine hier nicht gezeigte Federanordnung nach hinten gezogen, so dass die Spannklauen 63 zum Spannen des Werkzeugwechselkopfs 58 radial nach außen gedrückt werden. Zum Lösen des Werkzeugwechselkopfs 58 muss die Spannstange 62 mit der daran befestigten Spannhülse 61 entgegen der Kraft der Federanordnung nach vorne gedrückt werden, wodurch die Spannklauen radial nach innen verschoben werden und den Werkzeughalter 58 freigeben. Der Aufbau und die Funktionsweise einer derartigen Spannvorrichtung ist in der DE 101 59 611 C1 ausführlich erläutert. Der Offenbarungsgehalt dieser Druckschrift wird daher ausdrücklich zum Gegenstand der vorliegenden Anmeldung gemacht.

Bei dem in Figur 7 dargestellten Spannsystem ist innerhalb der Spannstange 62 eine hohle Betätigungsstange 65 zur Verschiebung der Druckstange 12 innerhalb des Werkzeughalters 58 verschiebbar geführt. Die Löseeinheit 60 ist derart ausgeführt, dass die Spannstange 62 und/oder die Betätigungsstange 65 nach vorne geschoben und damit die Klemmung des Werkzeugs 3 innerhalb des Werkzeugwechselkopfs 58 und/oder die Klemmung des Werkzeugwechselkopfs 58 in der Arbeitsspindel 6 gelöst werden kann. Hierzu kann die Löseeinheit 60 zwei separate Druckkolben aufweisen, die getrennt voneinander oder gemeinsam ausfahrbar sind.

## Patentansprüche

1. Spannsystem mit einer rotatorisch antreibbaren Arbeitsspindel (6), einer in der Arbeitsspindel (6) integrierten ersten automatisch betätigbaren Spannvorrichtung (57) und einem in der Arbeitsspindel (6) auswechselbar angeordneten und durch die erste Spannvorrichtung (57) lösbar fixierbaren Werkzeugwechselkopf (58), in dem eine zweite automatisch betätigbare Spannvorrichtung (59) zum automatischen Spannen eines in den Werkzeugwechselkopf (58) einsetzbaren Werkzeugs (3) integriert ist, **dadurch gekennzeichnet, dass** der Arbeitsspindel (6) eine Löseeinheit (60) zum Lösen der ersten und zweiten Spannvorrichtung (57, 59) zugeordnet ist.

2. Spannsystem nach Anspruch 1, **dadurch gekennzeichnet, dass** die zweite automatisch betätigbare Spannvorrichtung (59) zur lösbaren Halterung eines Werkzeugs (3) oder einer Werkzeughalterung in einem Aufnahmeteil (1) mehrere innerhalb des Aufnahmeteils (1) um eine Mittelachse (32) konzentrisch angeordnete und durch eine Spannfeder (39) in eine Spannstellung beaufschlagte Zangenelemente (33) zum Spannen des Werkzeugs (3) oder der Werkzeughalterung enthält, wobei den Zangenelementen (33) ein axial verschiebbares Schließelement (17) zugeordnet ist, das in einer in Richtung der Zangenelemente (33) vorgeschobenen vorderen Stellung die Zangenelemente (33) zur Halterung in ihrer durch die Spannfeder (39) nach innen verschwenkten Spannstellung beaufschlagt und durch eine Löseeinrichtung (12, 16, 45, 46, 47) in eine zurückgezogene Stellung für die Freigabe der Zangenelemente (33) bewegbar ist.

3. Spannsystem nach Anspruch 2, **dadurch gekennzeichnet, dass** die Löseeinrichtung (12, 16, 45, 46, 47) eine mittels einer Druckstange (12) über ein Lösegetriebe (45, 46, 47) betätigbare Zugstange (16) enthält, die mit dem Schließelement (17) verbunden ist.

4. Spannsystem nach Anspruch 2 oder 3, **dadurch gekennzeichnet, dass** das Schließelement (17) in Richtung der Zangenelemente (33) vorstehende Spannklauen (20) mit schrägen Spannflächen (44) zur Anlage an dazu korrespondierenden schrägen Angriffsflächen (41) der Zangenelemente (33) enthält.

5. Spannsystem nach Anspruch 4, **dadurch gekennzeichnet, dass** die Spannklauen (20) des Schließelements (17) ein innerhalb des Aufnahmeteils (1) axial festgelegtes Halteelement (21) durchgreifen.

6. Spannsystem nach einem der Ansprüche 2 bis 5, **dadurch gekennzeichnet, dass** das Schließelement (17) durch eine Federanordnung (23) in Richtung der Zangenelemente (33) beaufschlagt ist.

7. Spannsystem nach einem der Ansprüche 2 bis 6, **dadurch gekennzeichnet, dass** die Zangenelemente (33) an ihren vorderen Enden an einer Ringschulter (43) im Inneren des Aufnahmeteils (1) axial abgestützt und innerhalb einer entsprechenden Ausnehmung (42) durch einen inneren Federring (37) radial nach außen gedrückt sind.

8. Spannsystem nach einem der Ansprüche 2 bis 7, **dadurch gekennzeichnet, dass** die Zangenelemente (33) an ihren dem Schließelement (17) zugewandeten hinteren Enden durch die Spannfeder (39) radial nach innen beaufschlagt sind.

9. Spannsystem nach einem der Ansprüche 2 bis 8, **dadurch gekennzeichnet, dass** die Zangenelemente (33) an ihrer Innenseite eine keilförmige Vertiefung (34) mit einer vorderen schrägen Einzugsfläche (35) aufweisen.

10. Spannsystem nach einem der Ansprüche 3 bis 9, **dadurch gekennzeichnet, dass** das Lösegetriebe (45, 46, 47) einen Spannkegel (45) enthält, der über Kugeln (46) auf einer konischen Anlagefläche (47) einer im Aufnahmeteil (1) fest angeordneten Lagerbuchse (25) abgestützt ist.

11. Spannsystem nach Anspruch 10, **dadurch gekennzeichnet, dass** der Spannkegel (45) an seiner Rückseite durch Druckstifte (48) an einem Ringbund (49) der Druckstange (12) abgestützt ist.

12. Spannsystem nach Anspruch 11, **dadurch gekennzeichnet, dass** die Druckstifte (48) an der Rückseite des Spannkegels (45) eingeschraubt sind und durch Durchgangslöcher (50) in einem Ringflansch (51) am hinteren Ende der Zugstange (16) ragen.

13. Spannsystem nach Anspruch 12, **dadurch gekennzeichnet, dass** die hinteren freien Enden der Druckstifte (48) an der Vorderseite des Ringbunds (49) der Druckstange (12) anliegen.

14. Spannsystem nach Anspruch 13, **dadurch gekennzeichnet, dass** an der Außenseite des Ringflansches (51) nach vorne vorstehende Stifte (52) befestigt sind, die in entsprechende Sacklöcher (53) an der Rückseite eines Druckrings (54) eingreifen.

15. Spannsystem nach Anspruch 14, **dadurch gekennzeichnet, dass** der Druckring (54) Stege (56) zur Anlage an den Kugel (46) enthält.

16. Spannsystem nach Anspruch 2, **dadurch gekennzeichnet, dass** die Löseeinrichtung einen elektrischen oder pneumatischen Antrieb zur Verschiebung des Schließelements (17) in die zurückgezogene Stellung für die Freigabe der Zangenelemente (33) umfasst.

17. Spannsystem nach einem der Ansprüche 3 bis 16, **dadurch gekennzeichnet, dass** das Schließelement (17) am vorderen Ende der um die Druckstange (12) koaxial angeordneten und gegenüber dieser verschiebbaren Zugstange (16) befestigt ist.

18. Spannsystem nach einem der Ansprüche 1 bis 17, **dadurch gekennzeichnet, dass** die erste Spannvorrichtung (57) eine axial verschiebbare Spannstange (62) mit einer daran angeordneten Spannhülse (61) zur Verschiebung von Spannklauen (63) zum Spannen des Werkzeugwechselkopfs (58) enthält.

19. Spannsystem nach Anspruch 18, **dadurch gekennzeichnet, dass** innerhalb der Spannstange (62) eine Betätigungsstange (65) zur Verschiebung der Druckstange (12) innerhalb des Werkzeugwechselkopfs (58) verschiebbar geführt ist.

20. Spannsystem nach Anspruch 19, **dadurch gekennzeichnet, dass** durch die Löseeinheit (60) die Spannstange (62) und die Betätigungsstange (65) verschiebbar sind.

## Claims

1. Clamping system with a rotationally driveable work spindle (6), a first automatically actuatable clamping device (57) integrated in the work spindle (6), and a tool change head (58) which is arranged interchangeably in the work spindle (6) and fixable releasably by the first clamping device (57) and in which is integrated a second automatically actuatable clamping device (59) for automatic clamping of a tool (3) insertable in the tool change head (58), **characterised in that** the work spindle (6) has an associated releasing unit (60) for releasing the first and second clamping device (57, 59).

2. Clamping system according to claim 1, **characterised in that** the second automatically actuatable clamping device (59) for releasably holding a tool (3) or a tool holding fixture in a mounting part (1) comprises a plurality of gripping elements (33) arranged concentrically about a centre axis (32) inside the mounting part (1) and forced into a clamping position by a clamping spring (39) for clamping of the tool (3) or the tool holding fixture, wherein the gripping elements (33) have an associated axially displaceable closing element (17) which in a forward position advanced in the direction of the gripping elements (33) forces the gripping elements (33) to hold in their clamping position pivoted inwards by the clamping spring (39) and can be moved by a releasing device (12, 16, 45, 46, 47) into a retracted position to release the gripping elements (33).

3. Clamping system according to claim 2, **characterised in that** the releasing device (12, 16, 45, 46, 47) comprises a draw rod (16) which can be actuated by means of a thrust rod (12) through a releasing gear mechanism (45, 46, 47) and is connected to the closing element (17).

4. Clamping system according to claim 2 or 3,
**characterised in that** the closing element (17) comprises clamping claws (20) which project in the direction of the gripping elements (33) and have oblique clamping faces (44) for bearing on corresponding oblique engaging faces (41) of the gripping elements (33).

5. Clamping system according to claim 4, **characterised in that** the clamping claws (20) of the closing element (17) grip through a holding element (21) which is fixed axially inside the mounting part (1).

6. Clamping system according to one of claims 2 to 5, **characterised in that** the closing element (17) is forced in the direction of the gripping elements (33) by a spring arrangement (23).

7. Clamping system according to one of claims 2 to 6, **characterised in that** at the their front ends the gripping elements (33) are supported axially on an annular shoulder (43) in the interior of the mounting part (1) and are pressed radially outwards by an internal spring washer (37) inside a corresponding recess (42).

8. Clamping system according to one of claims 2 to 7, **characterised in that** the gripping elements (33) are forced radially inwards by the clamping spring (39) at their rear ends facing the closing element (17).

9. Clamping system according to one of claims 2 to 8, **characterised in that** on their inside the gripping elements (33) exhibit a wedge-shaped depression (34) with a front oblique drawing-in face (35).

10. Clamping system according to one of claims 3 to 9, **characterised in that** the releasing gear mechanism (45, 46, 47) comprises a clamping cone (45) which is supported by means of balls (46) on a conical bearing face (47) of a bearing bush (25) arranged fixed in the mounting part (1).

11. Clamping system according to claim 10, **characterised in that** on its rear side the clamping cone (45) is supported by thrust pins (48) on an annular collar (49) of the thrust rod (12).

12. Clamping system according to claim 11, **characterised in that** the thrust pins (48) are screwed in on the rear side of the clamping cone (45) and extend through through holes (50) in an annular flange (51) at the rear end of the draw rod (16).

13. Clamping system according to claim 12, **characterised in that** the rear free ends of the thrust pins (48) bear on the front side of the annular collar (49) of the thrust rod (12).

14. Clamping system according to claim 13, **characterised in that** fastened on the outside of the annular flange (51) are pins (52) which project forwards and engage in corresponding blind holes (53) on the rear side of a thrust ring (54).

15. Clamping system according to claim 14, **characterised in that** the thrust ring (54) comprises projections (56) for bearing on the balls (46).

16. Clamping system according to claim 2, **characterised in that** the releasing device comprises an electric or pneumatic drive for moving the closing element (17) into the retracted position to release the gripping elements (33).

17. Clamping system according to one of claims 3 to 16, **characterised in that** the closing element (17) is fastened at the front end of the draw rod (16) which is arranged coaxially about the thrust rod (12) and displaceable in relation to the latter.

18. Clamping system according to one of claims 1 to 17, **characterised in that** the first clamping device (57) comprises an axially displaceable clamping rod (62) with a clamping sleeve (61) arranged thereon for moving clamping claws (63) for clamping the tool change head (58).

19. Clamping system according to claim 18, **characterised in that** an actuating rod (65) is guided displaceably inside the clamping rod (62) for displacing the thrust rod (12) inside the tool change head (58).

20. Clamping system according to claim 19, **characterised in that** the clamping rod (62) and the actuating rod (65) are displaceable by the releasing unit (60).

## Revendications

1. Système de serrage comprenant une broche de travail (6) pouvant être entraînée en rotation ; un premier dispositif de serrage (57) actionnable automatiquement et intégré dans ladite broche de travail (6) ; et une tête (58) de remplacement d'outillage qui est logée dans ladite broche de travail (6) de manière interchangeable, peut être consignée amoviblement à demeure par ledit premier dispositif de serrage (57), et dans laquelle est intégré un second dispositif de serrage (59) actionnable automatiquement en vue de l'ablocage automatique d'un outil (3) pouvant être inséré dans ladite tête (58) de remplacement d'outillage, **caractérisé par le fait qu'**une unité de dissociation (60) est affectée à la broche de travail (6), en vue du desserrage des premier et second dispositifs de serrage (57, 59).

2. Système de serrage selon la revendication 1, **caractérisé par le fait que** le second dispositif de serrage (59) actionnable automatiquement englobe, pour assurer la retenue libérable d'un outil (3) ou d'un support d'outillage dans une pièce réceptrice (1), plusieurs éléments (33) du type pinces agencés concentriquement autour d'un axe médian (32), à l'intérieur de ladite pièce réceptrice (1), et sollicités vers une position d'ablocage, par l'intermédiaire d'un ressort de serrage (39), en vue d'abloquer ledit outil (3) ou ledit support d'outillage, lesdits éléments (33) du type pinces coopérant avec un élément de fermeture (17) qui peut coulisser axialement; sollicite lesdits éléments (33) du type pinces, dans une position antérieure résultant d'une avance dans la direction desdits éléments (33) du type pinces, afin de les maintenir dans leur position d'ablocage prise par pivotement vers l'intérieur, sous l'action dudit ressort de serrage (39) ; et peut être déplacé vers une position rétractée, par l'intermédiaire d'un dispositif de desserrage (12, 16, 45, 46, 47), afin de libérer lesdits éléments (33) du type pinces.

3. Système de serrage selon la revendication 2, **caractérisé par le fait que** le dispositif de desserrage (12, 16, 45, 46, 47) englobe une tige de traction (16) actionnable au moyen d'une tige de pression (12), par l'intermédiaire d'une transmission de desserrage (45, 46, 47), et reliée à l'élément de fermeture (17).

4. Système de serrage selon la revendication 2 ou 3, **caractérisé par le fait que** l'élément de fermeture (17) comprend des crabots de serrage (20) faisant saillie dans la direction des éléments (33) du type pinces, et pourvus de surfaces inclinées de serrage (44) conçues pour venir s'appliquer contre des surfaces (41) de venue en prise desdits éléments (33) du type pinces, dotées d'une inclinaison complémentaire.

5. Système de serrage selon la revendication 4, **caractérisé par le fait que** les crabots de serrage (20) de l'élément de fermeture (17) traversent un élément de retenue (21) arrêté axialement à l'intérieur de la pièce réceptrice (1).

6. Système de serrage selon l'une des revendications 2 à 5, **caractérisé par le fait que** l'élément de fermeture (17) est sollicité, en direction des éléments (33) du type pinces, par l'intermédiaire d'un ensemble de ressorts (23).

7. Système de serrage selon l'une des revendications 2 à 6, **caractérisé par le fait que** les éléments (33) du type pinces prennent axialement appui contre un épaulement annulaire (43) par leurs extrémités antérieures, dans l'espace interne de la pièce réceptrice (1), et sont poussés radialement vers l'extérieur à l'intérieur d'un évidement correspondant (42), sous l'action d'une bague élastique intérieure (37).

8. Système de serrage selon l'une des revendications 2 à 7, **caractérisé par le fait que** les éléments (33) du type pinces sont sollicités radialement vers l'intérieur, par le ressort de serrage (39), à leurs extrémités postérieures tournées vers l'élément de fermeture (17).

9. Système de serrage selon l'une des revendications 2 à 8, **caractérisé par le fait que** les éléments (33) du type pinces présentent, sur leur face intérieure, un renfoncement cunéiforme (34) muni d'une surface d'insertion (35) antérieure et inclinée.

10. Système de serrage selon l'une des revendications 3 à 9, **caractérisé par le fait que** la transmission de desserrage (45, 46, 47) renferme un cône de serrage (45) prenant appui, par l'intermédiaire de billes (46), sur une surface tronconique de contact (47) située sur une douille de portée (25) occupant une position Fixe dans la pièce réceptrice (1).

11. Système de serrage selon la revendication 10, **caractérisé par le fait que** le cône de serrage (45) est en appui à sa face postérieure, par l'intermédiaire de chevilles de pression (48), contre un collet annulaire (49) de la tige de pression (12).

12. Système de serrage selon la revendication 11, **caractérisé par le fait que** les chevilles de pression (48) sont vissées dans la face postérieure du cône de serrage (45), et traversent des trous de passage (50) pratiqués dans une collerette annulaire (51) située à l'extrémité postérieure de la tige de traction (16).

13. Système de serrage selon la revendication 12, **caractérisé par le fait que** les extrémités postérieures libres des chevilles de pression (48) sont en applique contre la face antérieure du collet annulaire (49) de la tige de pression (12).

14. Système de serrage selon la revendication 13, **caractérisé par le fait que** des pointeaux (52), faisant saillie vers l'avant et fixés à la face extérieure de la collerette annulaire (51), pénètrent dans des trous borgnes correspondants (53) pratiqués à la face postérieure d'une bague de pression (54).

15. Système de serrage selon la revendication 14, **caractérisé par le fait que** la bague de pression (54) comporte des membrures (56) en vue de la venue en applique contre les billes (46).

16. Système de serrage selon la revendication 2, **caractérisé par le fait que** le dispositif de desserrage comprend un entraînement électrique ou pneumatique destiné à faire coulisser l'élément de fermeture (17) vers la position rétractée, de manière à libérer les éléments (33) du type pinces.

17. Système de serrage selon l'une des revendications 3 à 16, **caractérisé par le fait que** l'élément de fermeture (17) est fixé à l'extrémité antérieure de la tige de traction (16) agencée coaxialement autour de la tige de pression (12), et pouvant coulisser vis-à-vis de cette dernière.

18. Système de serrage selon l'une des revendications 1 à 17, **caractérisé par le fait que** le premier dispositif de serrage (57) renferme une tige de serrage (62) pouvant coulisser axialement, et sur laquelle se trouve une douille de serrage (61) conçue pour déplacer des griffes d'ablocage (63), en vue d'abloquer la tête (58) de remplacement d'outillage.

19. Système de serrage selon la revendication 18, **caractérisé par le fait qu'**une tige d'actionnement (65) est guidée à coulissement à l'intérieur de la tige de serrage (62), en vue de faire coulisser la tige de pression (12) à l'intérieur de la tête (58) de remplacement d'outillage.

20. Système de serrage selon la revendication 19, **caractérisé par le fait que** la tige de serrage (62) et la tige d'actionnement (65) peuvent être animées de coulissements par l'intermédiaire de l'unité de dissociation (60).
